# DEMANDE DE BREVET EUROPEEN

(11) **EP 4 813 837 A1**
(43) Date de publication de la demande: **30.09.2026**
(21) Numéro de dépôt: 26165810.8
(22) Date de dépôt: 18.03.2026
(51) Int. Cl.: B64D 11/06

(54) **REPOSE-PIEDS À STRUCTURE MÉTALLIQUE FILAIRE MUNI D'UN SUPPORT À SANGLES**

(30) Priorité: 26.03.2025 FR 2503105
(71) Demandeur: Safran Seats, 78370 Plaisir (FR)
(72) Inventeur: OLIVAS, Laura, 77550 Moissy-Cramayel (FR); COTTA, Gérald, 77550 Moissy-Cramayel (FR)
(74) Mandataire: Marconnet, Sébastien

(57) **Abrégé**

La présente invention porte sur un repose-pieds (23) pour un siège d'avion comportant:
- un cadre (25), et
- un support (29) comportant des sangles (30.1, 30.2) entrelacées ou parallèles fixées au cadre (25), les sangles (30.1, 30.2) étant tendues de façon à pouvoir supporter une partie des jambes et/ou les pieds d'un passager.

## Description

La présente invention porte sur un repose-pieds à structure métallique filaire muni d'un support à sangles. L'invention trouve une application particulièrement avantageuse dans le domaine de l'aéronautique, en particulier avec les unités de sièges de type "classe affaires" et "première classe" d'une cabine d'avion.

De façon connue en soi, une telle unité de siège comporte un siège associé à une coque d'intimité s'étendant au moins en partie autour du siège de manière à délimiter un espace semi-clos autour du passager. Une telle configuration permet de garantir l'intimité du passager.

Le siège offre au passager différentes positions de confort, d'une position "assise" jusqu'à une position "allongée", dans laquelle une assise et un dossier du siège définissent un plan de couchage sensiblement horizontal pour que le passager puisse s'allonger. Des positions intermédiaires de confort sont aussi proposées, telles que la position "relax" dans laquelle le dossier du siège est fortement incliné vers l'arrière.

L'unité de siège comporte également une console munie d'un logement dans lequel est disposé un repose-pieds dit également "ottoman" sur lequel un passager arrière peut poser ses pieds, notamment lorsque son siège se trouve en position allongée.

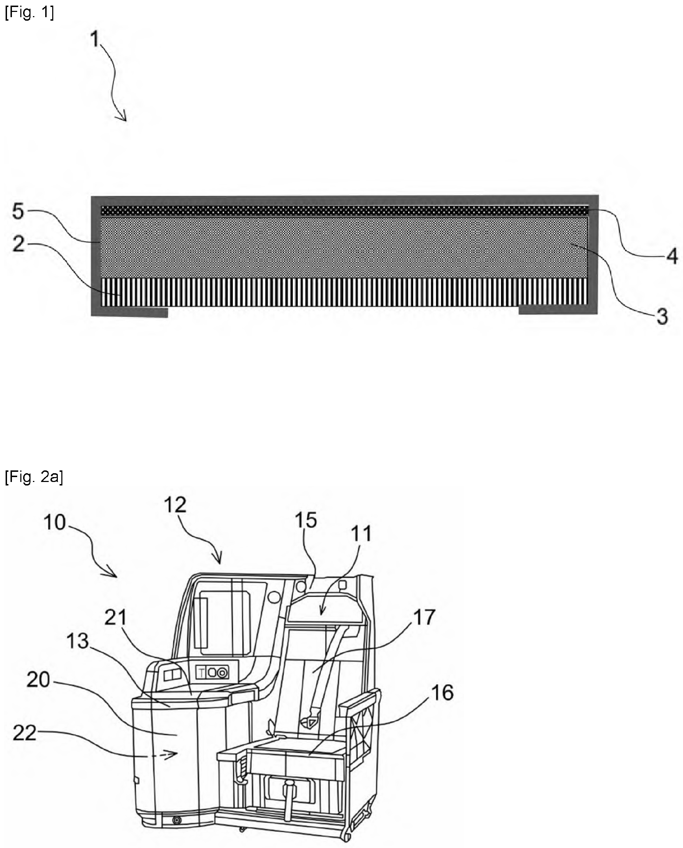

Comme cela est illustré sur la figure 1, un panneau de repose-pieds 1 est formé par une couche structurelle 2 comportant une âme centrale réalisée dans un matériau nid d'abeille et deux plaques en matériau composite disposées de part et d'autre de l'âme centrale. Les plaques en matériau composite peuvent comporter un renfort fibreux ou tissé, à base de fibres de carbone ou de fibre de verre, enrobé d'une résine.

La couche structurelle 2 est recouverte par une couche de confort 3, notamment réalisée en mousse, qui peut être elle-même recouverte par une couche de matériau anti-feu 4. L'ensemble peut être recouvert par une coiffe d'habillage 5.

Les panneaux composites finissent généralement brulés en fin de cycle car ils sont difficilement recyclables du fait de leur multi-composition. Les éléments qui les composent ne sont également pas à base de matériaux recyclés. Les matériaux du panneau de repose-pieds ont été identifiés dans un rapport de l'ATI (pour "Aerospace Technology Institute" selon la terminologie anglosaxonne) relatif à des composants des sièges aéronautiques comme prioritairement à remplacer pour améliorer l'empreinte environnementale des sièges d'avions. Il existe donc le besoin de remplacer la couche structurelle composite du panneau de repose-pieds par un élément aisément recyclable.

L'invention vise à combler efficacement ce besoin en proposant un repose-pieds pour un siège d'avion comportant:
- un cadre, et
- un support comportant des sangles entrelacées ou parallèles fixées au cadre, les sangles étant tendues de façon à pouvoir supporter une partie des jambes et /ou les pieds d'un passager.

L'invention permet ainsi, grâce à l'utilisation du cadre pouvant être réalisé en métal, d'effectuer un recyclage du matériau du repose-pieds. L'invention offre une alternative plus durable et respectueuse de l'environnement par rapport au matériau composite actuellement utilisé. En outre, étant donné que les pieds du passager sont en contact avec les sangles entrelacées et qu'il n'y a pas d'appui direct sur la structure filaire, l'invention permet de faire l'économie d'une couche de confort en mousse. L'invention permet en outre de réduire les coûts d'outillage, dans la mesure où le cadre peut être obtenu au moyen de machines de cintrage manuelles ou à commande numérique. Cela représente également des économies de matières et de temps de développement comparativement à la fabrication d'un moule pour réaliser une structure composite en nid d'abeille.

Selon une réalisation de l'invention, les sangles entrelacées présentent une configuration en treillis.

Selon une réalisation de l'invention, ledit repose-pieds comporte des premières sangles s'étendant suivant une première direction et des deuxièmes sangles s'étendant suivant une deuxième direction.

Selon une réalisation de l'invention, la première direction et la deuxième direction forment un angle compris entre 0 degré exclu et 90 degrés.

Selon une réalisation de l'invention, les sangles entrelacées comportent au moins une portion enroulée autour du cadre et cousue ou collée.

Selon une réalisation de l'invention, le cadre comporte une portion filaire droite et une portion filaire gauche s'étendant parallèlement l'une par rapport à l'autre ainsi qu'une portion filaire avant et une portion filaire arrière s'étendant parallèlement l'une par rapport à l'autre.

Selon une réalisation de l'invention, la portion filaire avant destinée à être située du côté d'un passager est au moins en partie décalée verticalement vers le bas par rapport à un plan du cadre passant par la portion filaire droite et la portion filaire gauche.

Selon une réalisation de l'invention, le cadre comporte des portions de fixation.

Selon une réalisation de l'invention, les portions de fixation sont disposées verticalement en retrait vers le bas par rapport à un plan du cadre dans lequel s'étend la portion filaire droite et la portion filaire gauche.

Selon une réalisation de l'invention, ledit repose-pieds comporte:
- deux portions de fixation arrière, chaque portion de fixation arrière comportant une rainure ouverte vers l'arrière du cadre dans laquelle peut être inséré un pion d'indexage et de maintien du cadre disposé sur une paroi latérale correspondante d'un logement de réception du repose-pieds, et
- deux portions de fixation avant, chaque portion de fixation avant comportant une ouverture de passage d'un organe de fixation dans laquelle peut être inséré un organe de fixation pour assurer une fixation du cadre avec la paroi latérale correspondante du logement de réception du repose pieds.

Selon une réalisation de l'invention, le cadre est réalisé dans un matériau à base aluminium, en particulier de l'aluminium recyclé.

Selon une réalisation de l'invention, les sangles entrelacées sont réalisées dans un matériau choisi notamment parmi du polyester, du lin, ou tout autre matériau utilisé pour réaliser des sangles de sièges d'avions.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentées à titre d'exemples non limitatifs, qui pourront servir à compléter la compréhension de la présente invention et l'exposé de sa réalisation et, le cas échéant, contribuer à sa définition, sur lesquelles :
[Fig. 1] La figure 1, déjà décrite, est une vue en coupe transversale d'un panneau de repose-pieds selon l'état de la technique;
[Fig. 2a] [Fig. 2b] Les figures 2a et 2b sont des vues en perspective avant et arrière d'une unité de siège d'avion comportant un repose-pieds selon l'invention;
[Fig. 3] La figure 3 est une vue en perspective d'un repose-pieds selon la présente invention;
[Fig. 4] La figure 4 est une vue en perspective d'un cadre de repose-pieds selon l'invention;
[Fig. 5] La figure 5 est une vue en perspective illustrant le montage d'un cadre de repose-pieds selon l'invention à l'intérieur d'un logement d'une console d'une unité de siège selon l'invention;
[Fig. 6a] [Fig. 6b] Les figures 6a et 6b sont respectivement des vues de dessus et de côté illustrant une configuration de repose-pieds selon l'invention articulé par rapport à un logement de repose-pieds.

Il est à noter que, sur les figures, les éléments structurels et/ou fonctionnels communs aux différents modes de réalisation présentent les mêmes références. Ainsi, sauf mention contraire, de tels éléments disposent de propriétés structurelles, dimensionnelles et matérielles identiques.

Les termes relatifs du type "avant", "arrière", "horizontal", "vertical", sont entendus par référence au sens commun que leur donnerait un passager installé sur un siège situé à l'arrière du siège selon l'invention et regardant le repose-pieds associé au siège selon l'invention.

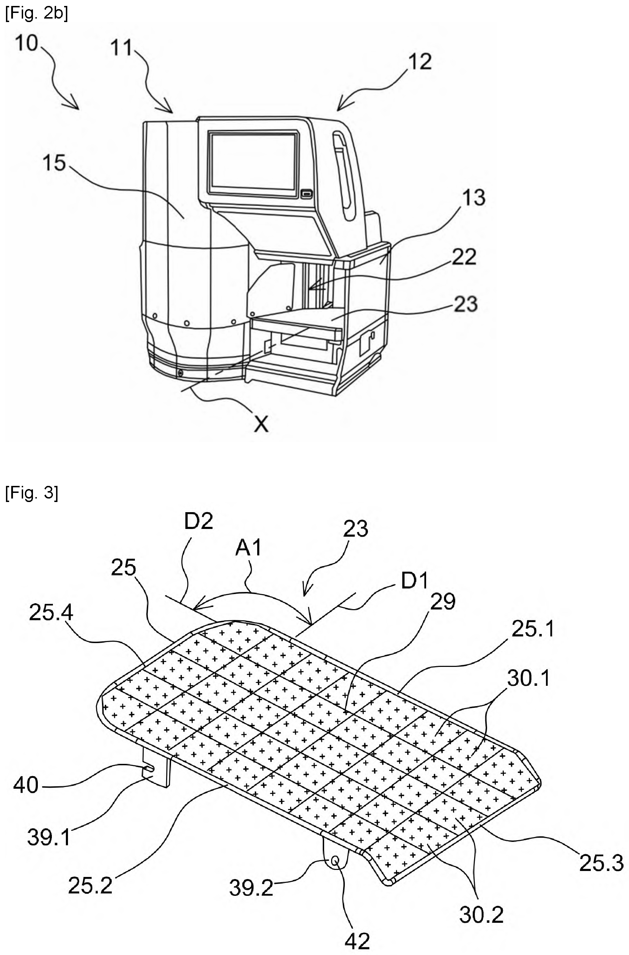

Les figures 2a et 2b montrent une unité de siège 10 comportant un siège 11 et un ensemble de coque d'intimité 12 comprenant une console 13 disposée à côté du siège 11 et une coque d'intimité 15 s'étendant au moins en partie autour du siège 11 de manière à délimiter un espace semi-clos autour du passager. Une telle configuration permet de garantir l'intimité du passager assis sur le siège 11.

Plus précisément, le siège 11 comporte une assise 16 et un dossier 17. Le siège 11 est avantageusement pourvu d'une cinématique lui permettant d'être mobile entre une position "assise" dans laquelle le siège 11 est configuré pour définir une position assise d'un passager, et une position "allongée" dans laquelle l'assise 16 et le dossier 17 définissent une surface de couchage pour le passager, avantageusement sensiblement horizontale. Le siège 11 peut également prendre au moins une position intermédiaire de confort, dite position relax, dans laquelle le dossier du siège 11 est fortement incliné vers l'arrière.

La console 13 comporte des parois latérales 20 et une paroi supérieure 21 sur laquelle le passager peut poser des objets. La console 13 comporte un logement 22 de réception de repose-pieds. Un repose-pieds 23 est disposé à l'intérieur de ce logement interne 22 de la console 13. Le logement de réception de repose-pieds 22 est ouvert vers l'arrière afin qu'un passager arrière puisse poser ses pieds sur le repose-pieds 23.

Le repose-pieds 23 présente un axe X (cf. figure 2b) correspondant à l'intersection entre le repose-pieds 23 et un plan médian vertical. L'axe X peut être parallèle à la direction de l'orientation des jambes d'un passager allongé dont les pieds sont posés sur le repose-pieds 17.

Comme cela est illustré sur la figure 3, le repose-pieds 23 comporte un cadre 25 et un support 29 comportant des sangles entrelacées 30.1, 30.2 fixées au cadre 25. Les sangles entrelacées 30.1, 30.2 étant tendues de façon à pouvoir supporter une partie des jambes et/ou les pieds d'un passager. En variante, les sangles du support 29 sont des sangles parallèles les unes par rapport aux autres.

Le cadre 25 est réalisé dans un matériau à base aluminium, en particulier de l'aluminium recyclé. L'aluminium présente un bon compromis entre sa résistance mécanique et sa masse pour proposer une solution robuste et légère. En variante, le cadre 25 peut être réalisée en acier ou tout autre matériau métallique adapté à l'application. Le cadre 25 peut être réalisé en utilisant un fil métallique ayant un diamètre compris entre 4 et 20 mm, en fonction des exigences de charge mécanique. De préférence, le diamètre du fil métallique est compris entre 7 et 12mm. Le fil métallique peut être plein ou tubulaire, c'est-à-dire creux. Le fil métallique peut être mis en forme par une machine de cintrage. Les extrémités du fil métallique peuvent être soudées entre elles.

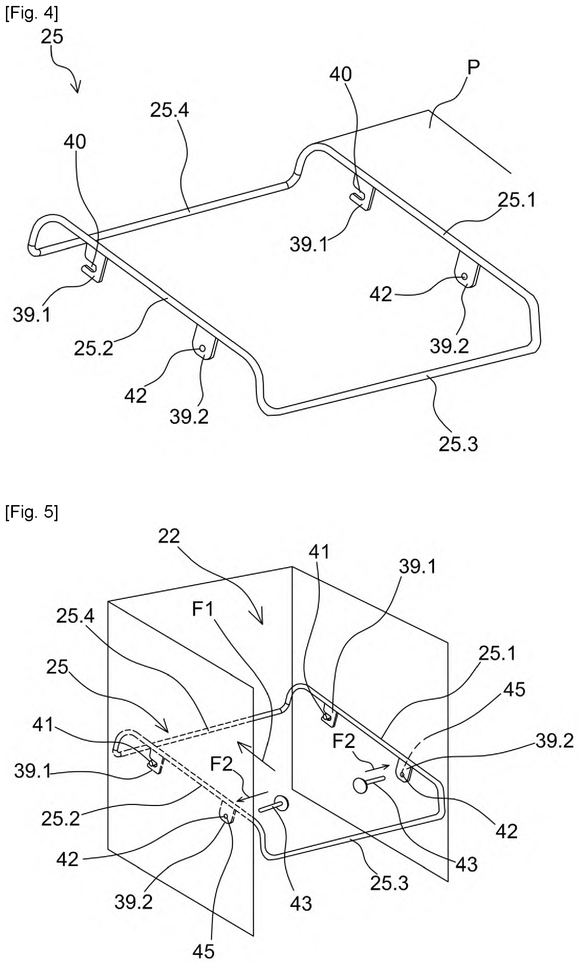

Comme cela est illustré sur la figure 4, le cadre 25 comporte une portion filaire droite 25.1 et une portion filaire gauche 25.2 s'étendant parallèlement l'une par rapport à l'autre ainsi qu'une portion filaire avant 25.3 et une portion filaire arrière 25.4 s'étendant parallèlement l'une par rapport à l'autre. Les extrémités des portions filaires avant 25.3 et arrière 25.4 sont reliées chacune à une extrémité correspondante des portions filaires droite 25.1 et gauche 25.2. Les portions filaires droite 25.1 et gauche 25.2 peuvent s'étendre suivant l'axe X du repose-pieds 23. Le cadre 25 peut comporter des coins arrondis ou droits. Le cadre 25 délimite un espace vide entre les portions 25.1-25.4.

La portion filaire avant 25.3 destinée à être située du côté d'un passager peut être au moins en partie décalée verticalement vers le bas par rapport à un plan P du cadre 25 passant par la portion filaire droite 25.1 et la portion filaire gauche 25.2.

La portion filaire arrière 25.4 destinée à être située du côté opposé d'un passager peut également être au moins en partie décalée verticalement vers le bas par rapport à un plan P du cadre 25 passant par la portion filaire droite 25.1 et la portion filaire gauche 25.2.

Une telle configuration permet au support 29 de se déformer librement avant que la portion filaire avant 25.3 et/ou la portion filaire arrière 25.4 puisse assurer une reprise des efforts appliqués par les jambes du passager sur le repose-pieds 23.

Les sangles entrelacées 30.1, 30.2 montrées sur la figure 3 peuvent être réalisées dans un matériau flexible idéalement recyclé et recyclable, notamment un matériau élastique. En variante, les sangles entrelacées 30.1, 30.2 sont réalisées dans un matériau non flexible idéalement recyclé et recyclable, voire être issues des matières, notamment des matières textiles, utilisées dans des sièges d'avions par exemple les ceintures de sécurité toutes classes comprises, sièges pilotes et équipages inclus. Les sangles entrelacées 30.1, 30.2 peuvent présenter une forme de bande allongée ayant une largeur comprise entre 10mm et 100mm. Les sangles entrelacées 30.1, 30.2 peuvent être réalisées dans un matériau choisi notamment parmi du polyester, du lin, ou du coton ou tout autre matériau utilisé pour réaliser des sangles de sièges d'avions toutes classes confondues, sièges pilotes et équipage inclus.

Les sangles entrelacées 30.1, 30.2 présentent une configuration en treillis. Le support 29 comporte des premières sangles 30.1 s'étendant suivant une première direction D1 et des deuxièmes sangles 30.2 s'étendant suivant une deuxième direction D2.

Les premières sangles 30.1 sont fixées d'une part à la portion filaire droite 25.1 et d'autre part à la portion filaire gauche 25.2. Les deuxièmes sangles 30.2 sont fixées d'une part à la portion filaire avant 25.3 et d'autre part à la portion filaire arrière 25.4.

A cet effet, les sangles entrelacées 30.1, 30.2 comportent au moins une portion enroulée autour du cadre 25 et cousue ou collée. Alternativement, les sangles 30.1, 30.2 sont fixées au cadre 25 par tout autre moyen adapté à l'application, par exemple des fixations par attaches textiles autoagrippantes notamment de type velcro (marque déposée).

Une première sangle 30.1 peut passer alternativement au-dessus puis en dessous d'une ou plusieurs deuxième(s) sangle(s) 30.2. De façon analogue, une deuxième sangle 30.2 peut passer alternativement au-dessus puis en dessous d'une ou plusieurs première(s) sangle(s) 30.1. La première direction D1 suivant laquelle s'étend des premières sangles 30.1 et la deuxième direction D2 suivant laquelle s'étend les deuxièmes sangles 30.2 peuvent former un angle A1 de l'ordre de 90 degrés. En variante, cet angle A1 peut être de l'ordre de 45 degrés ou peut prendre toute autre valeur comprise entre 0 degré exclu et 90 degrés.

En variante, le support 29 comporte uniquement les premières sangles 30.1 parallèles entre elles ou uniquement les deuxièmes sangles 30.2 parallèles entre elles.

Comme cela est illustré sur la figure 4, le cadre 25 comporte des portions de fixation 39.1, 39.2. Les portions de fixation 39.1, 39.2 sont disposées verticalement en retrait vers le bas par rapport à un plan P du cadre 25 dans lequel s'étend la portion filaire droite 25.1 et la portion filaire gauche 25.2.

Le cadre 25 comprend deux portions de fixation arrière 39.1 disposées respectivement sur la portion filaire droite 25.1 et la portion filaire gauche 25.2. Chaque portion de fixation arrière 39.1 comporte une rainure 40 ouverte vers l'arrière du cadre 25 dans laquelle peut être inséré un pion 41 d'indexage et de maintien du cadre 25 disposé sur une paroi latérale correspondante d'un logement de réception de repose-pieds 22.

Le cadre 25 comprend deux portions de fixation avant 39.2 comportant chacune une ouverture 42 de passage d'un organe de fixation dans laquelle peut être inséré un organe de fixation 43 pour assurer une fixation du cadre 25 avec la paroi latérale correspondante du logement de réception de repose-pieds 22. Un organe de fixation 43 peut être constitué par une vis, un boulon, un rivet, ou tout autre organe de fixation adapté à l'application.

La fixation du repose-pieds 23 dans le logement 22 de la console 13 peut être effectuée en deux étapes. Comme cela est illustré sur la figure 5, suivant une première étape, le repose-pieds 23 est inséré à l'intérieur du logement 22 selon la flèche F1, de sorte qu'un pion 41 d'indexage et de maintien et blocage vienne s'insérer à l'intérieur d'une rainure 40 correspondante et coulisser le long de la rainure 40 jusqu'à venir en butée avec une extrémité fermée de la rainure 40. Le repose-pieds 23 est alors positionné correctement suivant une direction axiale tout en étant retenu verticalement par des parties pleines supérieure et inférieure des portions 39.1 délimitant la rainure 40.

Suivant une deuxième étape, une ouverture 42 des portions de fixation 39.2 est disposée en regard d'une ouverture de fixation 45 correspondante réalisée dans une paroi latérale du logement 22 de la console. Il est ensuite possible d'insérer, selon les flèches F2, un organe de fixation 43 à l'intérieur des ouvertures 42 et 45 en vis-à-vis l'une de l'autre pour assurer la fixation du repose-pieds 23 à l'intérieur du logement de réception de repose-pieds 22.

Grâce aux pions 41 d'indexage et de maintien utilisés en combinaison avec les portions de fixation 39.1, le montage du repose-pieds 23 à l'intérieur du logement 22 peut être réalisé à l'aveugle par un opérateur.

Lors du montage, le support 29 est préalablement fixé sur le cadre 25. Il n'a pas été représenté sur la figure 5 afin d'améliorer la visibilité des portions de fixation 39.1, 39.2.

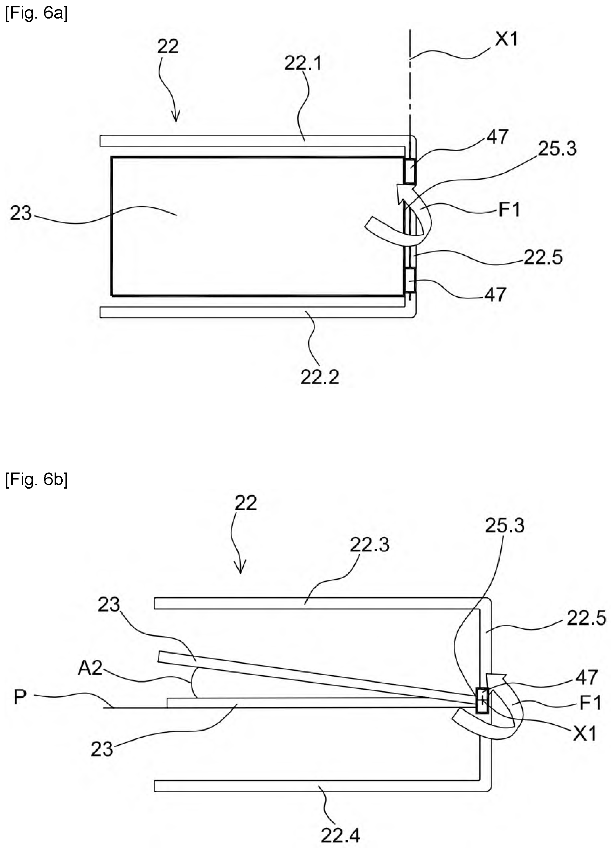

Comme cela est illustré sur les figures 6a et 6b correspondant respectivement à une vue de dessus et une vue de côté, le logement de réception de repose-pieds 22 délimite un espace fermé supérieurement et latéralement. A cet effet, le logement de réception de repose-pieds 22 est délimité par des parois latérales 22.1, 22.2 s'étendant verticalement, ainsi que par une paroi supérieure 22.3 et une paroi inférieure 22.4 s'étendant horizontalement. Le logement de réception de repose-pieds 22 comporte également un fond 22.5 disposé du côté opposé à l'extrémité ouverte du logement de repose-pieds 22.

Le repose-pieds 23 est articulé par rapport au logement de réception de repose-pieds 22 autour d'un axe horizontal X1. A cet effet, au moins une charnière 47 à axe horizontal X1 assure une liaison mécanique entre un bord avant du repose-pieds 23, notamment la portion filaire avant 25.3, et le fond 22.5 du logement de repose-pieds 22. Le repose-pieds 23 est mobile en rotation suivant la flèche F1 autour de l'axe X1 de la charnière 47. La charnière 47 est par exemple une charnière à friction.

Dans l'exemple représenté, on prévoit deux charnières à friction 47 assurant une liaison mécanique entre le bord avant 25.3 du repose-pieds 23 et le fond 22.5 du logement de repose-pieds 22. Bien entendu, le nombre de charnières 47 utilisées peut varier en fonction de l'application.

Le passager peut ainsi faire varier l'angle d'inclinaison A2 du repose-pieds 23 par rapport à un plan horizontal P pour améliorer son confort. L'angle de débattement A2 du repose-pieds 23 par rapport au plan horizontal P est par exemple compris entre 0 et 30 degrés.

En variante, il est possible d'intégrer une liaison pivot à axe horizontal entre chaque bord latéral du repose-pieds 23 et une paroi latérale 22.1, 22.2 correspondante du logement de réception du repose-pieds 22.

Afin d'assurer la finition de l'ensemble, il est possible d'utiliser une coiffe d'habillage recouvrant le support 29. La coiffe d'habillage peut, par exemple, être réalisée dans un matériau choisi parmi un matériau textile, de la suédine, du cuir, du similicuir, et/ou tout autre matériau flexible adapté à la finition du panneau. La matière de la coiffe d'habillage est idéalement issue des matières recyclées et pourrait être recyclé à nouveau à la fin de vie du produit. La coiffe d'habillage peut présenter des motifs décoratifs sur ses parties visibles. De tels motifs décoratifs peuvent être personnalisés, en particulier en fonction de souhaits d'une compagnie aérienne. La coiffe d'habillage peut présenter une épaisseur comprise entre 0.3mm et 5mm et valant de préférence de l'ordre de 2 mm.

Le support 29 à sangles selon l'invention peut être utilisé pour une assise ou un dossier de siège d'avion.

Bien entendu, les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

En outre, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de fonctionnement décrits précédemment, pouvant être pris séparément ou en association.

## Revendications

1. Repose-pieds (23) pour un siège d'avion (11) **caractérisé en ce que** ledit repose-pieds (23) comporte:
- un cadre (25), et
- un support (29) comportant des sangles (30.1, 30.2) entrelacées ou parallèles fixées au cadre (25), les sangles (30.1, 30.2) étant tendues de façon à pouvoir supporter une partie des jambes et /ou les pieds d'un passager.

2. Repose-pieds selon la revendication 1, **caractérisé en ce que** les sangles entrelacées (30.1, 30.2) présentent une configuration en treillis.

3. Repose-pieds selon la revendication 2, **caractérisé en ce qu'**il comporte des premières sangles (30.1) s'étendant suivant une première direction (D1) et des deuxièmes sangles (30.2) s'étendant suivant une deuxième direction (D2).

4. Repose-pieds selon la revendication 3, **caractérisé en ce que** la première direction (D1) et la deuxième direction (D2) forment un angle compris entre 0 degré exclu et 90 degrés.

5. Repose-pieds selon l'une quelconque des revendications 1 à 4, **caractérisé en ce que** les sangles entrelacées (30.1, 30.2) comportent au moins une portion enroulée autour du cadre (25) et cousue ou collée.

6. Repose-pieds selon l'une quelconque des revendications 1 à 5, **caractérisé en ce que** le cadre (25) comporte une portion filaire droite (25.1) et une portion filaire gauche (25.2) s'étendant parallèlement l'une par rapport à l'autre ainsi qu'une portion filaire avant (25.3) et une portion filaire arrière (25.4) s'étendant parallèlement l'une par rapport à l'autre.

7. Repose-pieds selon la revendication 6, **caractérisé en ce que** la portion filaire avant (25.3) destinée à être située du côté d'un passager est au moins en partie décalée verticalement vers le bas par rapport à un plan (P) du cadre (25) passant par la portion filaire droite (25.1) et la portion filaire gauche (25.2).

8. Repose-pieds selon l'une quelconque des revendications 1 à 7, **caractérisé en ce que** le cadre (25) comporte des portions de fixation (39.1, 39.2).

9. Repose-pieds selon les revendications 6 et 8, **caractérisé en ce que** les portions de fixation (39.1, 39.2) sont disposées verticalement en retrait vers le bas par rapport à un plan (P) du cadre dans lequel s'étend la portion filaire droite (25.1) et la portion filaire gauche (25.2).

10. Repose-pieds selon la revendication 8 ou 9, **caractérisé en ce qu'**il comporte:
- deux portions de fixation arrière (39.1), chaque portion de fixation arrière (39.1) comportant une rainure (40) ouverte vers l'arrière du cadre (25) dans laquelle peut être inséré un pion (41) d'indexage et de maintien du cadre (25) disposé sur une paroi latérale correspondante d'un logement de réception de repose-pieds (22), et
- deux portions de fixation avant (39.2), chaque portion de fixation avant (39.2) comportant une ouverture (42) de passage d'un organe de fixation dans laquelle peut être inséré un organe de fixation (43) pour assurer une fixation du cadre (25) avec la paroi latérale correspondante du logement de réception de repose pieds (22).

11. Repose-pieds selon l'une quelconque des revendications 1 à 5, **caractérisé en ce que** le repose-pieds (23) est articulé par rapport à un logement de réception de repose-pieds (22) autour d'un axe horizontal (X1).

12. Repose-pieds selon la revendication 11, **caractérisé en ce qu'**au moins une charnière (47) à axe horizontal assure une liaison mécanique entre un bord avant du repose-pieds (23) et un fond (22.5) du logement de repose-pieds (22).

13. Repose-pieds selon l'une quelconque des revendications 1 à 12, **caractérisé en ce que** le cadre (25) est réalisé dans un matériau à base aluminium, en particulier de l'aluminium recyclé.

14. Repose-pieds selon l'une quelconque des revendications 1 à 13, **caractérisé en ce que** les sangles entrelacées (30.1, 30.2) sont réalisées dans un matériau choisi notamment parmi du polyester, du lin, ou du coton ou tout autre matériau utilisé pour réaliser des sangles de sièges d'avions.
